# EUROPÄISCHE PATENTSCHRIFT

(11) **EP 3 502 760 B1**
(45) Veröffentlichungstag und Bekanntmachung des Hinweises auf die Patenterteilung: **29.09.2021**
(21) Anmeldenummer: 18000943.3
(22) Anmeldetag: 06.12.2018
(51) Int. Cl.: G02B 6/44

(54) **HALTEVORRICHTUNG ZUM FIXIEREN UND VORSORTIEREN VON GLASFASERKABELN**
HOLDING DEVICE FOR FIXING AND PRE-SORTING GLASS FIBRE CABLES
DISPOSITIF DE MAINTIEN PERMETTANT DE FIXER ET DE PRÉPOSITIONNER DES CÂBLES DE FIBRE DE VERRE

(30) Priorität: 21.12.2017 DE 102017011931
(43) Veröffentlichungstag der Anmeldung: 26.06.2019
(73) Patentinhaber: Langmatz GmbH, 82467 Garmisch-Partenkirchen (DE)
(72) Erfinder: Ertl, Werner, 82490 Farchant (DE)
(74) Vertreter: Flosdorff, Jürgen

(56) Entgegenhaltungen:
- EP-A1- 0 681 132
- DE-A1-102006 029 872
- DE-A1-102011 111 399
- JP-A- 2000 089 041
- US-A- 2 650 948
- US-A1- 2010 258 686
- US-A1- 2015 168 663
- US-B1- 6 464 530
- US-B2- 7 952 027

## Beschreibung

Die Erfindung betrifft eine Haltevorrichtung zum Fixieren und Vorsortieren von Glasfaserkabeln (GF-Kabel), mit einem Rahmenteil und einer Montageplatte, an der das Rahmenteil befestigt wird, wobei das Rahmenteil zwei mit Abstand sich gegenüberliegende Wandabschnitte und zwei im rechten Winkel zu den Wandabschnitten angebrachte schwenkbare Klappen aufweist, die im geschlossenen Zustand die offenen Seiten des Rahmenteils verschließen. Die fixierten und vorsortierten Glasfaserkabeln werden vorzugsweise einer Patch- oder Spleißbaugruppe zugeführt, ohne dass die Erfindung hierauf beschränkt ist. Das Rahmenteil hat zusammen mit den zwei geschlossenen Klappen in etwa eine Kastenform mit einem oberen rechteckigen Rahmenabschnitt, an dem die beiden sich gegenüberliegenden Wandabschnitte mittig angeformt sind.

Die DE 10 2006 029 872 A1 offenbart eine Leitungstülle zur Abdichtung von aus einem Motorraum in einen Wasserkasten eines Kraftfahrzeugs führenden Leitungen, die zwei hohlkörperartige Gehäuseabschnitte aufweist, die schwenkbar miteinander verbunden sind. Die gegenüberliegenden Wände der beiden Gehäuseabschnitte haben nahezu über deren gesamte Länge reichende Ausschnitte, so dass elastische Dichtelemente an den Ausschnitten freiliegen, die in die hohlkörperartigen Gehäuseabschnitte eingesetzt sind. Auf das Dichtelement eines der beiden Gehäuseabschnitte werden Leitungen aufgelegt, woraufhin die Leitungstülle durch Umklappen des anderen Gehäuseabschnitts geschlossen wird. Dadurch werden die Leitungen zwischen den aufeinander liegenden Dichtelementen eingeklemmt, wodurch die Leitungstülle eine dichtende Wirkung hat.

Die EP 0 681 132 A1 offenbart eine ähnliche Vorrichtung zur Befestigung von Kabeln, die in den seitlichen Wänden der beiden Gehäuseteile halbkreisförmige Aussparungen hat. Auch hier werden die Kabel auf die bündig mit dem oberen Rand der Gehäusehälfte verlaufende elastische Einlage gelegt, woraufhin der andere Gehäuseteil auf den ersten Gehäuseteil aufgesetzt wird und die Kabel in die beiden elastischen Einlagen eingedrückt werden.

Die US 2010/0258686 A1 offenbart eine Kabelleiste, bei der in einem Krümmungsbereich Haltebügel angeordnet sind, die Nuten haben, in die Kabel eingelegt werden, die in den Nuten elastisch eingebettet werden.

Die US2015/168663A1 offenbart eine Gehäuse zum Sortieren von Glasfaserkabeln für die Telekommunikation, die in Einbuchtungen in dem Gehäuse einlegt werden.

Eine Haltevorrichtung der eingangs genannten Art ist in der DE10 2011 111 399A1 offenbart, die einen Glasfaser-Netzverteiler mit einem Gehäuse betrifft, in dem eine Montageplatte angeordnet ist, an der die Haltevorrichtung zum Fixieren und Vorsortieren von Glasfaserkabeln angebracht sind. Mit dieser Haltevorrichtung können nur Glasfaserkabel eines bestimmten Durchmessers fixiert werden. Die Glasfaserkabel werden in Einbuchtungen an den längs gerichteten Rändern der sich gegenüberliegenden Wandabschnitte eingelegt und können in einem leichten Klemmsitz in den Einbuchtungen gehalten sein, wodurch sie jedoch nur unzureichend gegen auf die Glasfaserkabel einwirkende Zugkräfte fixiert sind.

Der vorliegenden Erfindung liegt die Aufgabe zugrunde, eine Haltevorrichtung zum Sortierten und Fixieren von Glasfaserkabeln anzugeben, bei der die obigen Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht eine Haltevorrichtung für Glasfaserkabel vor, bei der von den seitlichen Rändern der Wandabschnitte vorzugsweise schräg nach oben verlaufende Zinken vorstehen, zwischen denen jeweils ein Abstand verbleibt, der mindestens dem größten Durchmesser der zu fixierenden Glasfaserkabel entspricht, wobei der Boden der durch jeweils zwei Zinken begrenzten Nut bevorzugt halbkreisförmig gerundet ist. Die Haltevorrichtung wird auf Füßen stehend an der Montageplatte in aufrechter Lage montiert, so dass die Glasfaserkabel nach dem Einlegen zwischen die Zinken zuverlässig gehalten sind, bis die zwei schwenkbaren Klappen geschlossen werden. Dabei können Glasfaserkabel unterschiedlicher Durchmesser, meist Durchmesser von 1,9 mm und 2,4 mm, zwischen die Zinken eingelegt werden, da der Zwischenraum zwischen den Zinken dem größten Durchmesser der zu fixierenden Glasfaserkabel entspricht.

Weiter sieht die Erfindung vor, dass mittig in dem Rahmenteil eine Querwand zwischen den Wandabschnitten verläuft, an der an beiden Seiten eine Einlage aus einem elastischem Material mit hohem Reibungs-koeffizienten befestigt ist, die so dick ist, dass sie über die Ebene der seitlichen Ränder der Wandabschnitte vorsteht. Das heißt, dass die Einlagen ein wenig, bevorzugt 1 bis 3 mm in die durch die Zinken begrenzten Nuten hineinragen, so dass die eingelegten Glasfaserkabel an den Einlagen anliegen. Ein geeignetes Material für diese Einlagen ist EPDM Zellkautschuk, ohne dass die Erfindung hierauf beschränkt ist.

Erfindungsgemäß ist ferner vorgesehen, dass die zwei schwenkbaren Klappen im geschlossenen Zustand so weit zwischen die Zinken eintreten, dass sie die eingelegten Glasfaserkabel gegen die Einlagen drücken. Die elastischen Einlagen halten hierdurch die eingelegten Glasfaserkabel ungeachtet ihres Durchmessers so fest, dass alle zu erwartenden Zugkräfte sicher von der Haltevorrichtung aufgenommen werden, so dass die Glasfaserkabel hinter der Haltevorrichtung sicher zugentlastet sind. Hierdurch können Zugkräfte von 70 N oder mehr sicher aufgenommen werden.

In vorteilhafter Ausgestaltung der Erfindung ist vorgesehen, dass die zwei schwenkbaren Klappen in Querrichtung zwischen den gegenüberliegenden Wandabschnitten verlaufende Federarme aufweisen, die so bemessen sind, dass sie mit den Zwischenräumen bzw. Nuten zwischen den Zinken im Bereich der Ränder der Wandabschnitte übereinstimmen. Das heißt, dass je ein Federarm gegen ein aufgenommenes Glasfaserkabel drückt, wenn die Klappen geschlossen sind.

Die Federarme sind vorteilhafterweise an seitlichen Stegen der Klappen angeformt, und zwar abwechselnd an dem einem oder dem anderen seitlichen Steg. Die Federarme stehen dabei über die Stege nach innen vor.

Außerdem wird vorgeschlagen, dass die Federarme eine geriffelte Oberfläche haben, was ebenfalls zur Zugentlastung der aufgenommenen Glasfaserkabel beiträgt.

Die Haltevorrichtung hat - wie eingangs erwähnt ist - bevorzugt einen oberen rechteckigen, geschlossenen Rahmenabschnitt, von dessen kürzeren Seiten sich die beiden Wandabschnitte nach unten zu zwei Bodenabschnitten erstrecken. Unter den beiden Bodenabschnitten sind zwei T-förmige Ansätze angeformt, die in entsprechend bemessene Aussparungen der Montageplatte einschiebbar sind, so dass die Haltevorrichtung in aufrechter Lage auf der Montageplatte befestigt ist. Die T-förmigen Ansätze können dabei in einem leichten Klemmsitz an der Montageplatte befestigt sein.

Die beiden Wandabschnitte haben am unteren Endbereich eine nach unten offene Aussparung, die zwischen den beiden Bodenabschnitten liegt und durch die ein dickes Glasfaserkabel durchführbar ist, das beispielsweise mit einem Kabelbinder auf der Montageplatte fixierbar ist.

Die zwei Klappen sind mit einem überstehenden Quersteg in einem zugehörigen Schlitz über den Bodenabschnitten einsteckbar, so dass die Haltevorrichtung aus den drei Teilen schnell und einfach zusammensetzbar ist. Außerdem hat jede Klappe an dem gegenüberliegenden Endabschnitt eine federnd zusammendrückbare Rastnase, die unter dem oberen Rahmenabschnitt des Rahmenteils lösbar einrasten kann.

Die Teile der Haltevorrichtung, nämlich das Rahmenteil und die zwei Klappen, sind bevorzugt im Spritzgussverfahren aus einem thermoplastischen Kunststoff hergestellt.

Weitere Einzelheiten der Erfindung ergeben sich aus der nachfolgenden Beschreibung einer bevorzugten Ausführungsform der Haltevorrichtung sowie anhand der Zeichnungen. Dabei zeigen:
- Figur 1: die Bestandteile der Haltevorrichtung in auseinandergezogener Darstellung;
- Figur 2: die Haltevorrichtung mit einseitig eingelegten Glasfaserkabeln ohne Klappe;
- Figur 3: die Haltevorrichtung der Figur 2 mit geschlossener Klappe,
- Figur 4: die Haltevorrichtung mit beidseitig eingelegten Glasfaserkabeln mit geschlossenen Klappen.

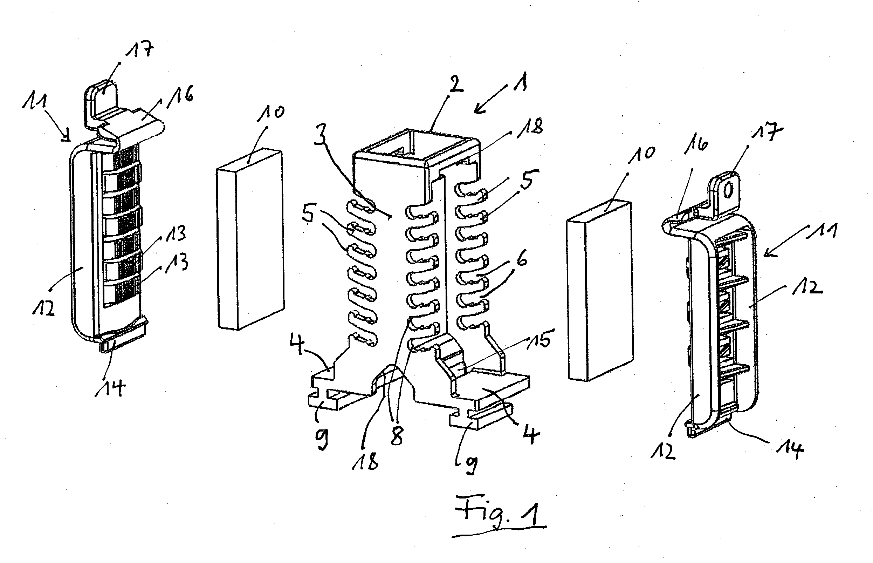

Figur 1 zeigt alle Bestandteile der Haltevorrichtung zum Fixieren und Vorsortieren von Glasfaserkabeln. Die Haltevorrichtung enthält ein einstückig im Spritzgussverfahren hergestelltes Rahmenteil 1, das einen oberen rechteckigen Rahmenabschnitt 2 enthält, von dessen gegenüberliegenden Kurzseiten zwei Wandabschnitte 3 nach unten zu zwei Bodenabschnitten 4 verlaufen, wobei sich die Wandabschnitte 3 nach unten auseinanderspreizen. An den seitlichen Rändern der Wandabschnitte 3 sind schräg nach oben gerichtete Zinken 5 angeformt, die zwischen sich Nuten 6 begrenzen, deren Breite bzw. Höhe etwas größer ist als der größte Durchmesser der zu sortierenden und zu fixierenden Kabel 7. Der Boden 8 der Nuten 6 ist jeweils halbkreisförmig gerundet.

Unter den Bodenabschnitten 4 sind querschnittlich T-förmige Ansätze 9 angeformt, die in Ausschnitte einer nicht dargestellten Montageplatte eingeschoben werden, so dass die Haltevorrichtung 1 in aufrechter Lage auf der Montageplatte befestigt ist.

Mittig zwischen den Wandabschnitten 3 verläuft eine Querwand zwischen den Wandabschnitten 3, an der zu beiden Seiten eine rechteckige Einlage 10 aus Zellkautschuk befestigt ist. Dieses elastische Material hat einen sehr hohen Reibungskoeffizienten. Die Einlagen 10 haben eine solche Dicke, dass sie über den Nutboden 8 der Nuten 6 hinaus vorstehen, so dass eingelegte Glasfaserkabel 7 an der Einlage anliegen.

Die beiden Klappen 11 haben zwei seitliche Stege 12, zwischen denen Federarme 13 verlaufen, die abwechselnd an dem einen und dem anderen seitlichen Steg 12 angeformt sind. Dabei versteht es sich, dass das nicht angeformte Ende der Stege 13 frei endet, sodass die Federarme elastisch biegbar sind, wenn sie gegen eingelegte Glasfaserkabel 7 gedrückt werden, wenn die Klappen 11 geschlossen werden.

Die Klappen 11 haben am unteren Ende einen in Querrichtung verlaufenden Steg 14, der in einen Spalt 15 am Rand des Bodenabschnitts 4 einsetzbar ist, wodurch die Klappen 11 schwenkbar gehalten sind.

Am oberen Ende befindet sich eine federnd zusammendrückbare Rastnase 16, die beim Schließen der Klappe 11 unter einen Rand 18 des oberen Rahmenabschnitts 2 des Rahmenteils 1 einrastet, wobei in diesem Zustand eingelegte Glasfaserkabel 7 von den Federarmen 13 fest in die Einlage 10 gedrückt werden. Angeformte Griffabschnitte 17 ermöglichen ein leichtes Öffnen der Klappen 11.

Im unteren Bereich der Wandabschnitte 3 befinden sich Ausschnitte 18, durch die ein sehr viel dickeres Kabel als die Glasfaserkabel 7 durchgeführt werden kann, das z. B. mit Kabelbindern an der Montageplatte befestigt werden kann.

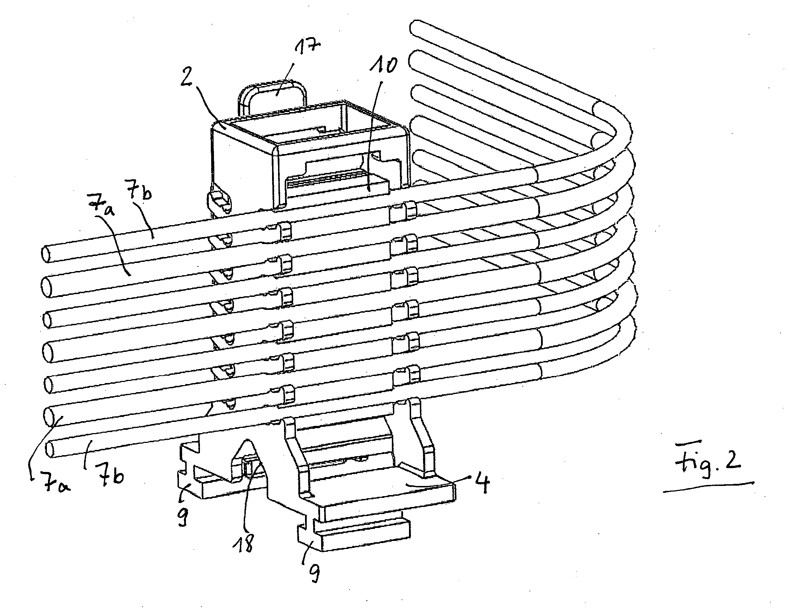

Figur 2 zeigt in den Nuten 6 eingelegte Glasfaserkabel 7 unterschiedlicher Dicke, wobei die dickeren Kabel mit 7 a und die dünneren Kabel mit 7 b bezeichnet sind.

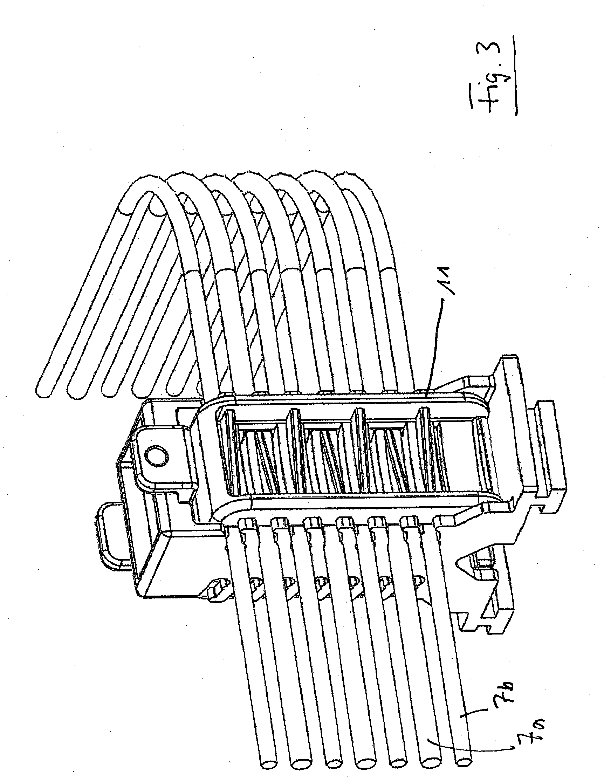

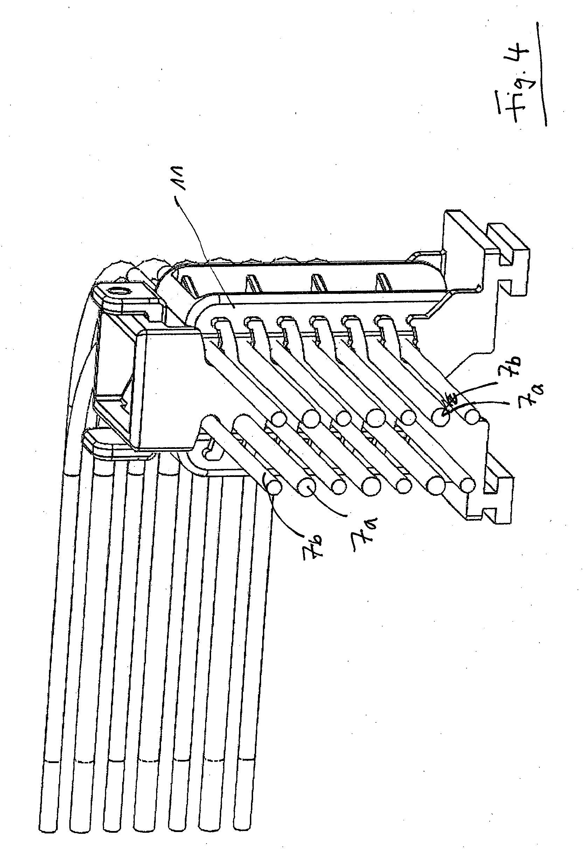

Figur 3 zeigt dieselbe Anordnung wie Figur 2, jedoch mit geschlossener Klappe 11. In der Darstellung der Figur 4 sind beide Seiten der Haltevorrichtung mit Glasfaserkabeln 7 a und 7 b belegt und beide Klappen 11 sind geschlossen.

## Patentansprüche

1. Haltevorrichtung zum Fixieren und Vorsortieren von Glasfaserkabeln (7a, 7b), mit einer Montageplatte und einem Rahmenteil (1) mit zwei mit Abstand sich gegenüberliegenden Wandabschnitten (3) und zwei im rechten Winkel zu den Wandabschnitten (3) angebrachten schwenkbaren Klappen (11), die im geschlossenen Zustand die offenen Seiten des Rahmenteils (1) verschließen, wobei von den seitlichen Rändern der Wandabschnitte (3) Zinken (5) vorstehen, zwischen denen jeweils eine Nut (6) verbleibt, in die ein Glasfaserkabel einlegbar ist,
**dadurch gekennzeichnet, dass** die Haltevorrichtung zwei an dem Rahmenteil (1) angeformte Fußabschnitte (9) aufweist, die an der Montageplatte befestigt werden, sodass das Rahmenteil (1) auf den Fußabschnitten (9) stehend in aufrechter Lage an der Montageplatte montiert ist,
dass in dem Rahmenteil (1) beidseitig je eine in Querrichtung verlaufende Einlage (10) aus einem elastischen Material an einer in Querrichtung verlaufenden Wand befestigt ist, die mittig in dem Rahmenteil (1) zwischen den Wandabschnitten (3) befestigt ist,
dass die Einlagen (10) so dick sind, dass sie über die Böden (8) der Nuten (6) vorstehen,
und dass die schwenkbaren Klappen (11) im geschlossenen Zustand zwischen die Zinken (5) eintreten und aufgenommene Glasfaserkabel (7a, 7b) gegen die Einlagen (10) drücken.

2. Haltevorrichtung nach Anspruch 1,
**dadurch gekennzeichnet,**
**dass** die Zinken (5) schräg nach oben gerichtet sind.

3. Haltevorrichtung nach einem der Ansprüche 1 bis 2,
**dadurch gekennzeichnet,**
**dass** die schwenkbaren Klappen (11) in Querrichtung verlaufende Federarme (13) aufweisen, die so bemessen sind, dass sie mit den Nuten (6) zwischen den Zinken (5) an den Böden (8) der Nuten (6) übereinstimmen.

4. Haltevorrichtung nach Anspruch 3,
**dadurch gekennzeichnet,**
**dass** die Federarme (13) an seitlichen Stegen (12) der Klappen (11) angeformt sind und über die Stege (12) nach innen vorstehen.

5. Haltevorrichtung nach Anspruch 3 oder 4,
**dadurch gekennzeichnet,**
**dass** die Federarme (13) eine geriffelte Oberfläche haben.

6. Haltevorrichtung nach Anspruch 5,
**dadurch gekennzeichnet,**
**dass** die Fußabschnitte (9) T-förmige Ansätze unter zwei Bodenabschnitten (4) des Rahmenteils (1) aufweisen, und dass die T-förmigen Ansätze in Aussparungen der Montageplatte einschiebbar sind.

7. Haltevorrichtung nach Anspruch 6,
**dadurch gekennzeichnet,**
**dass** die beiden Wandabschnitte (3) Aussparungen (18) aufweisen, durch die ein dickes Glasfaserkabel durchführbar ist, das vorzugsweise mit einem Kabelbinder fixierbar ist.

8. Haltevorrichtung nach einem der Ansprüche 1 bis 7,
**dadurch gekennzeichnet,**
**dass** jede Klappe (11) mit einem überstehenden Quersteg (14) in einen Schlitz (15) neben den Bodenabschnitten (4) einsteckbar ist.

9. Haltevorrichtung nach Anspruch 8,
**dadurch gekennzeichnet,**
**dass** jede Klappe (11) mit einer federnd zusammendrückbaren Rastnase (16) unter einem oberen Rahmenabschnitt (2) des Rahmenteils lösbar fixierbar ist.

10. Haltevorrichtung nach einem der Ansprüche 1 bis 9,
**dadurch gekennzeichnet,**
**dass** das Rahmenteil (1) und die beiden Klappen (11) im Spritzgussverfahren aus einem thermoplastischen Kunststoff hergestellt sind.

11. Haltevorrichtung nach einem der Ansprüche 1 bis 10,
**dadurch gekennzeichnet,**
**dass** vierzehn Glasfaserkabel (7a, 7b) in die Haltevorrichtung aufgenommen werden können.

## Claims

1. A holding device for fixing and pre-sorting glass fibre cables (7a, 7b) including a mounting plate and a frame member (1) with two opposed, spaced wall sections (3) and two pivotable flaps (11) attached at right-angles to the wall sections (3), which, in the closed state, close the open sides of the frame member (1), wherein projecting from the lateral edges of the wall sections (3) there are teeth (5), between which respective grooves (6) remain, into which a glass fibre cable may be inserted, **characterised in that** the holding device has two foot sections (9) integrally formed on the frame member (1), which are fastened to the mounting plate so that the frame member (1) is mounted in an upright position on the mounting plate standing on the foot sections (9), that fastened in the frame member (1) on both sides to a wall extending in the transverse direction there is a respective insert (10) of an elastic material extending in the transverse direction, which is fastened centrally in the frame member (1) between the wall sections (3), that the inserts (10) are so thick that they project above the bases (8) of the grooves (6) and that the pivotable flaps (11) pass inbetween the teeth (5) in the closed state and press received glass fibre cables (7a, 7b) against the inserts (10).

2. A holding device as claimed in Claim 1, **characterised in that** the teeth (5) are directed obliquely upwardly.

3. A holding device as claimed in one of Claims 1 to 2, **characterised in that** the pivotable flaps (11) have spring arms (13), which extend in the transverse direction and are so dimensioned that they correspond to the grooves (6) between the teeth (5) at the bases (8) of the grooves (6).

4. A holding device as claimed in Claim 3, **characterised in that** the spring arms (13) are integrally formed on lateral webs (12) on the flaps (11) and project inwardly beyond the webs (12).

5. A holding device as claimed in Claim 3 or 4, **characterised in that** the spring arms (13) have a ribbed surface.

6. A holding device as claimed in Claim 5, **characterised in that** the foot sections (9) have T-shaped formations below two base sections (4) of the frame member (1) and that the T-shaped formations may be slid into openings in the mounting plate.

7. A holding device as claimed in Claim 6, **characterised in that** the two wall sections (3) have openings (18), through which a thick glass fibre cable may be passed, which may be fixed in position, preferably with a cable tie.

8. A holding device as claimed in one of Claims 1 to 7, **characterised in that** each flap (11) is pluggable with a protruding transverse web (14) into a slit (15) adjacent the base sections (4).

9. A holding device as claimed in Claim 8, **characterised in that** each flap (11) is releasably fixable below an upper frame section (2) on the frame member with a resiliently compressible locking nose (16).

10. A holding device as claimed in one of Claims 1 to 9, **characterised in that** the frame member (1) and the two flaps (11) are manufactured from a thermoplastic plastic material in an injection moulding process.

11. A holding device as claimed in one of Claims 1 to 10, **characterised in that** fourteen glass fibre cables (7a, 7b) can be accommodated in the holding device.

## Revendications

1. Dispositif de maintien pour fixer et trier au préalable des câbles en fibre de verre (7a, 7b) avec une plaque de montage et une partie de cadre (1) avec deux sections de paroi (3) se faisant face à distance et deux abattants (11) pouvant pivoter installés à angle droit par rapport aux sections de paroi (3), qui ferment dans l'état fermé les côtés ouverts de la partie de cadre (1),
dans lequel
font saillie, des bords latéraux des sections de paroi (3), des dents (5), entre lesquelles il reste respectivement une rainure (6), dans laquelle un câble en fibre de verre peut être placé,
**caractérisé en ce que** le dispositif de maintien présente deux sections de pied (9) formées sur la partie de cadre (1), qui sont fixées sur la plaque de montage si bien que la partie de cadre (1) est montée sur la plaque de montage debout en position verticale sur les sections de pied (9),
que
est fixé dans la partie de cadre (1) de part et d'autre respectivement un entoilage (10) s'étendant dans la direction transversale, composé d'un matériau élastique sur une paroi s'étendant dans la direction transversale, qui est fixée au centre dans la partie de cadre (1) entre les sections de paroi (3),
que les entoilages (10) sont si épais qu'ils font saillie au-delà des fonds (8) des rainures (6),
et que les abattants (11) pouvant pivoter entrent dans l'état fermé entre les dents (5) et poussent des câbles en fibre de verre (7a, 7b) logés contre les entoilages (10).

2. Dispositif de maintien selon la revendication 1,
**caractérisé en ce**
**que** les dents (5) sont dirigées vers le haut de manière oblique.

3. Dispositif de maintien selon l'une quelconque des revendications 1 à 2,
**caractérisé en ce**
**que** les abattants (11) pouvant pivoter présentent des bras à ressort (13) s'étendant dans la direction transversale, qui sont dimensionnés de telle sorte qu'ils coïncident avec les rainures (6) entre les dents (5) sur les fonds (8) des rainures (6).

4. Dispositif de maintien selon la revendication 3,
**caractérisé en ce**
**que** les bras à ressort (13) sont formés sur des entretoises latérales (12) des abattants (11) et font saillie vers l'intérieur au-delà des entretoises (12).

5. Dispositif de maintien selon la revendication 3 ou 4,
**caractérisé en ce**
**que** les bras à ressort (13) ont une surface rainurée.

6. Dispositif de maintien selon la revendication 5,
**caractérisé en ce**
**que** les sections de pied (9) présentent des appendices en forme de T sous deux sections de fond (4) de la partie de cadre (1), et que les appendices en forme de T peuvent être insérés par glissement dans des évidements de la plaque de montage.

7. Dispositif de maintien selon la revendication 6,
**caractérisé en ce**
**que** les deux sections de paroi (3) présentent des évidements (18), à travers lesquels un câble en fibre de verre épais peut être guidé de part en part, qui peut être fixé de préférence à un serre-câble.

8. Dispositif de maintien selon l'une quelconque des revendications 1 à 7,
**caractérisé en ce**
**que** chaque abattant (11) peut être enfiché par une entretoise transversale (14) qui dépasse dans une entaille (15) à côté des sections de fond (4).

9. Dispositif de maintien selon la revendication 8,
**caractérisé en ce**
**que** chaque abattant (11) peut être fixé de manière amovible avec un ergot d'enclenchement (16) pouvant être comprimé sur ressorts sous une section de cadre supérieure (2) de la partie de cadre.

10. Dispositif de maintien selon l'une quelconque des revendications 1 à 9,
**caractérisé en ce**
**que** la partie de cadre (1) et les deux abattants (11) sont fabriqués à partir d'une matière plastique thermoplastique dans le procédé de moulage par injection.

11. Dispositif de maintien selon l'une quelconque des revendications 1 à 10,
**caractérisé en ce**
**que** quatorze câbles en fibre de verre (7a, 7b) peuvent être logés dans le dispositif de maintien.
